# EUROPEAN PATENT SPECIFICATION

(11) **EP 1 865 239 B1**
(45) Date of publication and mention of the grant of the patent: **12.05.2010**
(21) Application number: 06729121.1
(22) Date of filing: 15.03.2006
(51) Int. Cl.: F16K 17/06

(54) **RELIEF VALVE**
ENTLÜFTUNGSVENTIL
SOUPAPE DE DECHARGE

(30) Priority: 29.03.2005 JP 2005095363
(43) Date of publication of application: 12.12.2007
(73) Proprietor: FUJIKURA RUBBER LTD., Tokyo 141-0031 (JP)
(72) Inventor: NITTA, Toshinori, miya-ku, Saitama-shi, Saitama, 3300856 (JP)
(74) Representative: Schaumburg, Thoenes, Thurn, Landskron, Eckert
(86) International application number: PCT/JP2006/305100
(87) International publication number: WO 2006/103927

(56) References cited:
- WO-A1-03/102452
- DE-A1- 1 806 748
- JP-A- 08 170 745
- JP-A- 09 203 473
- JP-U- 05 066 378
- US-A- 287 004
- US-A- 2 072 271
- US-A- 3 800 824
- US-A- 5 971 016
- US-B1- 6 237 893

## Description

### TECHNICAL FIELD

The present invention relates to a relief valve which relieves an internal pressure upon the internal pressure reaching a relief pressure (set pressure).

### BACKGROUND OF THE INVENTION

A typical relief valve has a basic configuration which seats a valving element onto a valve seat so as to close a relief conduit (conduit to be relieved) at normal times, and which releases the valving element from the valve seat so as to relieve the internal pressure of the relief conduit upon the internal pressure of the relief conduit exceeding a spring force (reaching a set pressure). This relief valve is provided, on the cylindrical valve body thereof that has a valving element in a freely slidable fashion, with a male screw portion which is screwed into an end portion of the relief conduit.

### DISCLOSURE OF THE INVENTION

### PROBLEM TO BE SOLVED BY THE INVENTION

Therefore, this conventional relief valve must be prepared for every diameter or thread shape of the relief conduit, so that manufacturability and control of the relief valve are complicated. Additionally, the relief pressure can be adjusted by adjusting the spring pressure; however, in conventional relief valves, it is difficult to make this adjustment of the spring pressure, and it is almost impossible to make this adjustment if the diameter is small.
A relief valve according to the first part of claim 1 is disclosed by US-A-2 072 271.
An object of the present invention is to obtain a relief valve which can be generally used irrespective of the diameter or thread shape of an associated relief conduit and whose relief pressure can be easily adjusted.

### MEANS FOR SOLVING THE PROBLEMS

These problems are solved by a relief valve according to claim 1.
According to the present invention, the cylindrical valve body and the retainer body can be formed in coaxial cylinders which are screw-engaged with each other. According to this screw-engagement manner, the cylindrical valve body is provided with a cylindrical guide portion including a shaft portion which supports a valve shaft of a valving element assembly having the valving element so that the valve shaft is freely slidable on the shaft portion, and the valving element assembly is provided with a spring-receiving seat which is not in contact with inner peripheral surfaces of the cylindrical valve body nor the cylindrical retainer body. A compression spring serving as an element of the spring device is inserted in between the spring-receiving seat and a spring-receiving surface positioned around the cylindrical guide portion.
It is desirable that the spring-receiving seat partly project form an end of the cylindrical valve body in a state before the cylindrical valve body is coupled to the cylindrical retainer body. This spring-receiving seat can be composed of a spring-receiving ring and a lock nut which are screwed on the valve shaft of the valving element assembly.
The cylindrical retainer body is provided with a stopper flange and a screw-engaging cylinder which is smaller in diameter than the stopper flange, and screw-engaged with the cylindrical valve body. The position of the maximum screw-engagement between the screw-engaging cylinder and the cylindrical valve body can be controlled by the stopper flange. A conduit-engaging cylinder which is screw-engaged with one end of the relief conduit can be formed on the cylindrical retainer body on the opposite side of the stopper flange form the screw-engaging cylinder.

### BRIEF DESCRIPTION OF THE DRAWINGS

Figure 1 is a longitudinal cross sectional view of a first embodiment of a relief valve according to the present invention;
Figure 2 is a longitudinal cross sectional view taken along II-II line shown in Figure 1; and
Figure 3 is a longitudinal cross sectional view of a second embodiment of the relief valve according to the present invention.

### PREFERRED EMBODIMENTS OF THE INVENTION

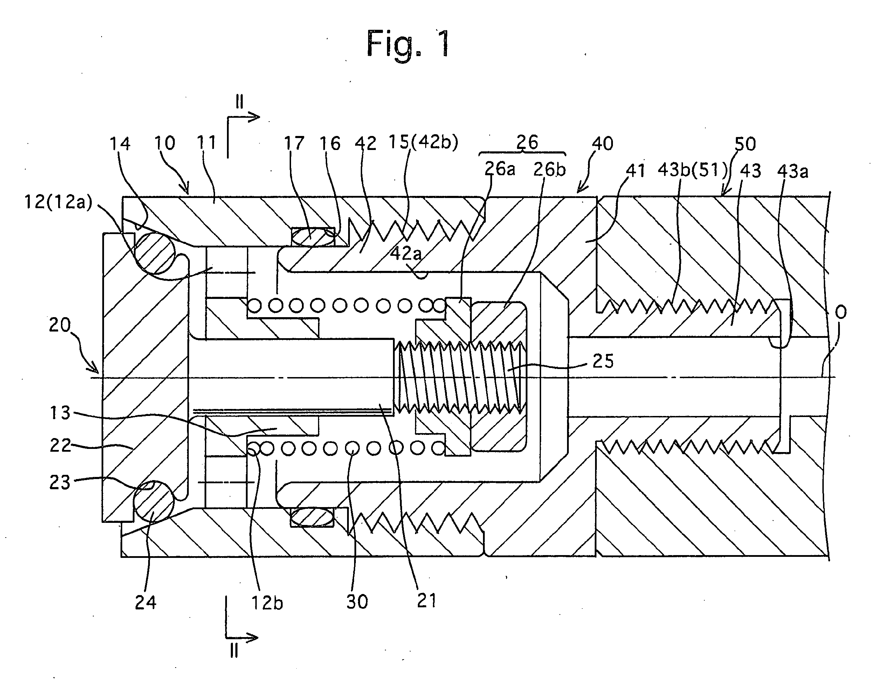

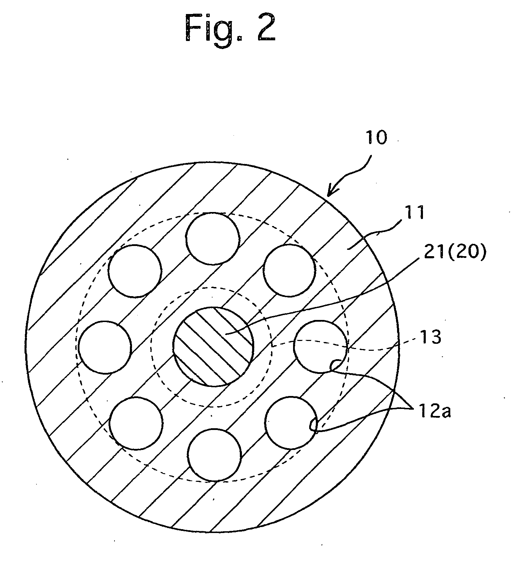

Figures 1 and 2 show a first embodiment of a relief valve according to the present invention. This relief valve is provided with a cylindrical valve body 10, a valving element assembly 20, a compression spring 30 and a cylindrical retainer body 40. The cylindrical valve body 10 is provided in a middle part of a cylindrical body 11 thereof with an axially-orthogonal wall 12 which is orthogonal to an axis O, and is further provided in the center of the axially-orthogonal wall 12 with a central cylindrical guide portion 13 which is positioned on the axis O. A valve seat 14 shaped into a truncated conical surface is formed at one end of the cylindrical body 11, while a female screw (female screw thread) 15 is formed on an inner peripheral surface of the cylindrical body 11 at the other end thereof. Passage holes 12a are formed in the axially-orthogonal wall 12 at intervals in the circumferential direction of the axially-orthogonal wall 12. The cylindrical body 11 is provided between the female screw 15 and the axially-orthogonal wall 12 with an O-ring groove 16.

The valving element assembly 20 is provided with a valve shaft 21 which is inserted into the central cylindrical guide portion 13 of the cylindrical valve body 10 to be freely slidable thereon, and is provided at one end of the valve shaft 21 with a valving element 22 having a truncated conical shape corresponding to the shape of the valve seat 14. An O-ring 24 which is brought close to and away from the valve seat 14 is fitted into an annular groove 23 formed on an outer peripheral surface of the valving element 22. The O-ring 24 can be replaced by a rubber material which is baked on an outer peripheral surface of the valving element 22. A spring-receiving seat 26 is screw-engaged on a male screw (male screw thread) 25 formed on the valve shaft 21 at the opposite end thereof from the valving element 22. The spring-receiving seat 26 is composed of a spring-receiving ring 26a and a lock nut 26b. The compression spring 30 is inserted in between the spring-receiving seat 26 and a spring-receiving surface 12b which is formed on the axially-orthogonal wall 12 on the inner periphery side thereof at a position between an outer periphery of the central cylindrical guide portion 13 and the plurality of passage holes 12a. The compression spring 30 continuously biases the valving element 22 to move the valving element 22 in a direction so as to seat onto the valve seat 14.

The cylindrical retainer body 40 is provided at opposite ends of a stopper flange 41 thereof with a screw-engaging cylinder 42 and a conduit-engaging cylinder 43, respectively, and is formed in a cylindrical shape as a whole. Namely, a large-diameter passage 42a is formed in the cylindrical retainer body 40 to extend from the screw-engaging cylinder 42 to the stopper flange 41, while a small-diameter passage 43a is formed in the cylindrical retainer body 40 to extend from the stopper flange 41 to the conduit-engaging cylinder 43. A male screw (male screw thread) 42b which is screw-engaged with the female screw 15 of the cylindrical valve body 10 is formed on an outer peripheral surface of the screw-engaging cylinder 42, while a male screw (female screw thread) 43b which is screw-engaged with a female screw (female screw thread) 51 formed at an end of the relief conduit 50 is formed on the outer peripheral surface of the conduit-engaging cylinder 43. In the embodiment shown in Figures 1 and 2, the female screw 51 (the male screw 43b) is a cylindrical screw.

The cylindrical valve body 10, the valving element assembly 20 and the compressed coil spring 30 that have been mentioned above are (can be) assembled in advance to be provided as a relief valve sub-assembly before the cylindrical retainer body 40 is coupled to the relief valve sub-assembly. In the relief valve sub-assembly that is assembled in advance, the spring-receiving seat 26 of the valving element assembly 20 is not in contact with the inner peripheral surface of the cylindrical body 11 of the cylindrical valve body 10 (namely, the valving element assembly 20 is guided in the axial direction thereof to be freely slidable on the central cylindrical guide portion 13 solely by the engaging connection between the valve shaft 21 and the central cylindrical guide portion 13). The compression spring 30 is positioned inside the cylindrical body 11 of the cylindrical valve body 10, and is not in contact with the inner peripheral surface of the cylindrical body 11, similar to the spring-receiving seat 26. A ring-shaped flow channel is formed on the outer periphery side of the spring-receiving seat 26 (the compression spring 30). Additionally, the spring-receiving seat 26 is partly exposed from an end of the cylindrical valve body 10 in a state before the cylindrical valve body 10 is coupled to the cylindrical retainer body 40. The above described relief valve sub-assembly except the passage holes 12a of the axially-orthogonal wall 12 is rotation-symmetrical in shape with respect to the axis O.

On the other hand, the cylindrical retainer body 40 is coupled to the cylindrical valve body 10 by screwing the male screw 42b into the female screw 15 of the cylindrical valve body 10 down to the limit of screw-engagement at which an end of the cylindrical body 11 comes in contact with the stopper flange 41. At this time, the O-ring 17 inserted into the O-ring groove 16 is compressed by an outer peripheral surface of the screw-engaging cylinder 42 to secure the airtightness between the cylindrical body 11 and the screw-engaging cylinder 42. The inner diameter of the screw-engaging cylinder 42 is sufficiently greater than the maximum diameters of the spring-receiving seat 26 and the compression spring 30, and the screw-engaging cylinder 42 does not come in contact with any elements other than the female screw 15 and no rotational force is exerted on the valving element assembly 20 when the screw-engaging cylinder 42 is screwed into the cylindrical valve body 10 by rotating the screw-engaging cylinder 42 relative to the cylindrical valve body 10. In other words, in a state where the cylindrical valve body 10 and the cylindrical retainer body 40 are coupled to each other, a ring-shaped flow channel is formed between the large-diameter passage 42a and the outer periphery of the valving element assembly 20. Note that the internal/external relationship between the screw-engaging cylinder 42 of the cylindrical retainer body 40 and the cylindrical body 11 of the cylindrical valve body 10 can be reversed. In the reversed case, neither the valving element assembly 20 nor the compression spring 30 comes in contact with the cylindrical body 11 and no rotational force is exerted on the valving element assembly 20 when the screw-engaging cylinder 42 is screwed on the cylindrical valve body 10 by rotating the screw-engaging cylinder 42 relative to the cylindrical valve body 10.

In the above described relief valve, the installation of the cylindrical valve body 10 to the relief conduit 50 is completed by screwing the male screw 43b of the conduit-engaging cylinder 43 into the female screw 51 of the relief conduit 50 in a state where the cylindrical valve body 10 and the cylindrical retainer body 40 are coupled to each other. As a matter of course, in some cases it is possible that firstly the cylindrical retainer body 40 be screwed into the female screw 51 that is provided at an end of the relief conduit 50 and subsequently the cylindrical valve body 10 be screw-engaged with the cylindrical retainer body 40.

Before the relief valve sub-assembly, which is composed of the cylindrical valve body 10, the valving element assembly 20 and the compressed coil spring 30, is coupled to the cylindrical retainer body 40, the spring-receiving seat 26 can be touched from the outside. Specifically, in this particular embodiment, the spring force for closing the valve can be easily adjusted by changing the position of screw-engagement of a combination of the spring-receiving ring 26a and the lock nut 26b with respect to the male screw 25 so as to change the axial position of the combination of the spring-receiving ring 26a and the lock nut 26b with respect to the male screw 25 since the spring-receiving seat 26 is partly exposed from an end of the cylindrical valve body 10.

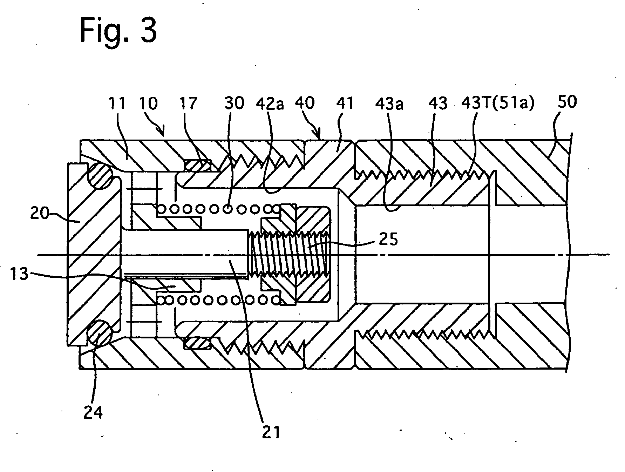

When the relief valve sub-assembly is applied to the relief conduit 50 which differs in diameter and screw-thread shape, only the cylindrical retainer body 40 has to be replaced by another one. The embodiment shown in Figure 3 is a relief valve in which, in the case
where a female screw formed at an end of the relief conduit 50 is a tapered female screw 51a, a tapered male screw 43T which corresponds to the tapered female screw 51a is formed on the outer peripheral surface of the conduit-engaging cylinder 43. The structure of the relief valve sub-assembly, which is composed of the cylindrical valve body 10, the valving element assembly 20 and the compressed coil spring 30, is identical to that of the first embodiment of the relief valve.

Figure 3 shows an embodiment of the cylindrical retainer body 40 by way of example, and the present invention is not limited to this particular embodiment.

### INDUSTRIAL APPLICABILITY

The general versatility of the relief valve according to the present invention is achieved because the cylindrical valve body can be shared while the relief valve can be applied to a relief conduit of a different type simply by replacing the retainer body by another one. Moreover, the valve-closing spring force can be adjusted with the retainer body and the cylindrical valve body being separated from each other, and the relief valve can also be easily applied to a small-diameter relief conduit.

## Claims

1. A relief valve including a cylindrical valve body (10) having a valve seat (14), a valving element (22), a spring device for seating said valving element (22) onto said valve seat (14) so as to close a flow channel, and a separate retainer body (40) having a screw-engaging cylindrical portion (42) screw-engaged with the valve body (10), and a connecting portion (43) connected to a relief conduit (50), wherein the valving element (22) is released from that valve seat (14) upon an internal pressure of said relief conduit (50) exceeding a valve closing force applied by said spring device, **characterized in that** said cylindrical retainer body (40) comprises a stopper flange (41) provided between the screw-engaging cylindrical portion (42) and the connecting portion (43), said screw-engaging cylindrical portion (42) being smaller in diameter than said stopper flange (41) wherein a position of maximum screw-engagement between said screw-engaging cylindrical portion (42) and said cylindrical valve body (10) is controlled by said stopper flange (41), and **in that** the connecting portion is formed by a conduit-engaging cylinder (43) screw-engaged with one end of said relief conduit (50) and formed on said cylindrical retainer body (40) on an opposite side of said stopper flange (41) from said screw-engaging cylindrical portion (42).

2. The relief valve according to claim 1, wherein said cylindrical valve body (10) comprises a cylindrical guide portion (13) including a shaft portion which supports a valve shaft (21) of a valving element assembly (20) having said valving element (22) so that said valve shaft (21) is freely slidable on said shaft portion,
wherein said valving element assembly (20) comprises a spring-receiving seat (26) which is not in contact with inner peripheral surfaces of said cylindrical valve body (10) nor said cylindrical retainer body (40), and
wherein a compression spring (30) serving as an element of said spring device is inserted in between said spring-receiving seat (26) and a spring-receiving surface (12b) positioned around said cylindrical guide portion.

3. The relief valve according to claim 1 or 2, wherein said spring-receiving seat (26) partly projects from an end of said cylindrical valve body (10) in a state before said cylindrical valve body (10) is coupled to said cylindrical retainer body (40).

4. The relief valve according to claim 3, wherein said spring-receiving seat (26) is composed of a spring-receiving ring (26a) and a lock nut (26b) which are screwed on said valve shaft (21) of said valving element assembly (20).

## Patentansprüche

1. Überdruckventil, umfassend einen zylindrischen Ventilkörper (10) mit einem Ventilsitz (14), einem Ventilelement (22), einer Federvorrichtung zum Platzieren des Ventilelements (22) auf dem Ventilsitz (14) in einer solchen Weise, dass ein Fließkanal geschlossen wird, und einem separaten Arretierkörper (40) mit einem einschraubbaren zylindrischen Abschnitt (42), der mit dem Ventilkörper (10) in Schraubeingriff steht, und mit einem Verbindungsabschnitt (43), der mit einer Entlastungsleitung (50) verbunden ist, wobei sich das Ventilelement (22) vom Ventilsitz (14) löst, wenn der interne Druck in der Entlastungsleitung (50) eine durch die Federvorrichtung ausgeübte Ventilschließkraft übersteigt, **dadurch gekennzeichnet, dass** der zylindrische Arretierkörper (40) einen Anschlagflansch (41) aufweist, der zwischen dem einschraubbaren zylindrischen Abschnitt (42) und dem Verbindungsabschnitt (43) vorgesehen ist, wobei der einschraubbare zylindrische Abschnitt (42) einen kleineren Durchmesser aufweist als der Anschlagflansch (41) und wobei eine Position, in der zwischen dem einschraubbaren zylindrischen Abschnitt (42) und dem zylindrischen Ventilkörper (10) eine maximale Einschraubverbindung hergestellt ist, durch den Anschlagflansch (41) bestimmt wird, und **dadurch**, dass der Verbindungsabschnitt durch einen mit der Leitung in Eingriff stehenden Zylinder (43) gebildet wird, der mit einem Ende der Entlastungsleitung (50) in Schraubeingriff steht und an dem zylindrischen Arretierkörper (40) an einer dem dem einschraubbaren zylindrischen Abschnitt (42) entgegengesetzten Seite des Anschlagflansches (41) ausgebildet ist.

2. Überdruckventil nach Anspruch 1, wobei der zylindrische Ventilkörper (10) einen zylindrischen Führungsabschnitt (13) aufweist, der einen Schaftabschnitt umfasst, welcher einen Ventilschaft (21) einer das Ventilelement (22) umfassenden Ventilelementanordnung (20) derart haltert, dass der Ventilschaft (21) auf dem Schaftabschnitt frei gleitbeweglich ist,
wobei die Ventilelementanordnung (20) einen Federaufnahmesitz (26) umfasst, der weder mit Innenumfangsflächen des zylindrischen Ventilkörpers (10) noch mit dem zylindrischen Arretierkörper (40) in Kontakt steht, und
wobei eine Druckfeder (30), die als ein Element der Federvorrichtung dient, zwischen dem Federaufnahmesitz (26) und einer rund um den zylindrischen Führungsabschnitt positionierten Federaufnahmefläche (12b) eingefügt ist.

3. Überdruckventil nach Anspruch 1 oder 2, wobei der Federaufnahmesitz (26) in einem Zustand vor dem Befestigen des zylindrischen Ventilkörpers (10) am zylindrischen Arretierkörper (40) teilweise von einem Ende des zylindrischen Ventilkörpers (10) vorsteht.

4. Überdruckventil nach Anspruch 3, wobei der Federaufnahmesitz (26) aus einem Federaufnahmering (26a) und einer Sicherungsmutter (26b) besteht, welche auf den Ventilschaft (21) der Ventilelementanordnung (20) aufgeschraubt werden.

## Revendications

1. Soupape de décharge incluant un corps de soupape cylindrique (10) ayant un siège de soupape (14), un élément de décharge (22), un dispositif à ressort permettant d'asseoir ledit élément de décharge (22) sur ledit siège de soupape (14) de façon à fermer un canal d'écoulement, et un corps de retenue séparé (40) ayant une portion cylindrique d'engagement par vissage (42) et engagée par vissage avec le corps de soupape (10), et une portion de raccordement (43) raccordée à une conduite de décharge (50), dans laquelle l'élément de décharge (22) est dégagé de ce siège de soupape (14) par une pression interne dudit conduit de décharge (50) qui est supérieure à la force de fermeture de soupape qui est appliquée par ledit dispositif à ressort, **caractérisée en ce que** ledit corps de retenue cylindrique (40) comprend une collerette de butée (41) agencée entre la portion cylindrique d'engagement par vissage (42) et la portion de raccordement (43), ladite portion cylindrique d'engagement par vissage (42) étant d'un diamètre inférieur à celui de ladite collerette de butée (41),
dans laquelle la position maximale d'engagement par vissage entre ladite partie cylindrique d'engagement par vissage (42) et ledit corps de soupape cylindrique (10) est contrôlée par ladite collerette de butée (41), et **en ce que** la portion de raccordement est formée par un cylindre d'engagement de conduit (43) engagé par vissage avec une extrémité dudit conduit de décharge (50), et formée sur ledit corps de retenue cylindrique (40) sur un côté opposé de ladite collerette de butée (41) à partir de ladite portion cylindrique d'engagement par vissage (42).

2. Soupape de décharge selon la revendication 1,
dans laquelle ledit corps de soupape cylindrique (10) comprend une portion de guidage cylindrique (13) incluant une partie de palier qui supporte une tige de soupape (21) d'un ensemble d'élément de décharge (20) incluant ledit élément de décharge (22), de telle façon que ladite tige de soupape (21) puisse coulisser librement dans ladite portion de palier,
dans laquelle ledit ensemble d'élément de décharge (20) comprend un siège de réception de ressort (26) qui n'est pas en contact avec les surfaces périphériques internes dudit corps de soupape cylindrique (10) ni avec ledit corps de retenue cylindrique (40), et
dans laquelle un ressort de compression (30) servant d'élément dudit dispositif à ressort est interposé entre ledit siège de réception de ressort (26) et une surface de réception de ressort (12b) disposée autour de ladite portion de guidage cylindrique.

3. Soupape de décharge selon la revendication 1 ou 2, dans laquelle ledit siège de réception de ressort (26) saille partiellement d'une extrémité dudit corps de soupape cylindrique (10) dans l'état qu'il occupe avant que ledit corps de soupape cylindrique (10) soit couplé audit corps de retenue cylindrique (40).

4. Soupape de décharge selon la revendication 3,
dans laquelle ledit siège de réception de ressort (26) est constitué d'une bague de réception de ressort (26a) et d'un écrou de blocage (26b) qui sont vissés sur ladite tige de soupape (21) dudit ensemble d'élément de décharge (20).
